(19)

Europäisches
Patentamt

European
Patent Office

Office européen
des brevets

(11) **EP 4 610 958 A1**

(12) **EUROPEAN PATENT APPLICATION**

(43) Date of publication:
03.09.2025 Bulletin 2025/36

(21) Application number: 24160218.4

(22) Date of filing: 28.02.2024

(51) International Patent Classification (IPC):
*G08B 13/196* (2006.01)      *G08B 21/04* (2006.01)
*G08B 29/18* (2006.01)       *G06V 20/52* (2022.01)

(52) Cooperative Patent Classification (CPC):
**G08B 29/18; G06V 20/52; G08B 13/19602;**
**G08B 21/0476**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **JANARDHANAN, Shaiju**
**670303 Kannur, Kerala (IN)**
• **SOORAJ PS, Arun**
**560099 Electronic City, Karnataka (IN)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND SYSTEM FOR MANAGING OBSTRUCTIONS IN FIELD OF VIEW OF SURVEILLANCE CAMERA**

(57)     Disclosed is a method (100) and a system (200) for managing obstructions in a field of view of a surveillance camera (304a-304d). The method comprises receiving a video stream from the surveillance camera. The method further comprises processing the video stream to segment each object (306) within the video stream. The method further comprises calculating an obstruction ratio representing a proportion of the field of view of the surveillance camera occluded by the segmented object. The method further comprises comparing the obstruction ratio with a predetermined obstruction threshold. The method further comprises generating an output signal when the obstruction ratio exceeds the predetermined obstruction threshold. The method further comprises configuring an alert unit to issue an obstruction alert upon being triggered by the output signal.

FIG. 6

EP 4 610 958 A1

**Description**

The present invention relates generally to the field of surveillance systems, and specifically to methods and systems for monitoring and managing obstructions within the field of view of surveillance cameras.

In industrial and factory settings, the deployment of surveillance cameras has become ubiquitous. The effectiveness of surveillance cameras is based on their strategic placement and in processing of their input, which together enable the detection of safety violations, unauthorized access, and other security concerns. For instance, these surveillance cameras provide functions ranging from monitoring personnel and vehicle movements to ensuring compliance with safety protocols, such as the proper use of personal protective equipment (PPE), jaywalking, crowd etc. The surveillance cameras which capture such inputs are usually fixed at specific locations within the industrial premise. The utility of these surveillance systems is based significantly on their ability to provide a clear, unobstructed view of the premises they are designed to monitor.

Despite the advancements in surveillance technology, one challenge that remains is the obstruction of a camera's field of view. Obstructions can arise from various sources, such as large vehicles parking in unintended locations, or a new structure that may have been erected impeding the camera's view. These obstructions not only render the surveillance system less effective but, in some cases, can completely nullify the monitoring advantages provided by the installation of such systems. Therefore, the ability of the surveillance system to fulfil its intended role is undermined when such obstructions are not promptly addressed.

Some conventional solutions have been employed to mitigate the issue of camera obstructions. One approach involves monitoring changes in image quality, with significant alterations triggering alerts for potential obstructions. Another approach relies on the comparison of current camera frames against a set reference image, identifying occlusions by detecting deviations from this reference. While these conventional approaches offer some level of automated oversight, they come with inherent limitations. Reliance on image quality changes can be prone to false positives, where simple variations in lighting or weather conditions may inadvertently signal an obstruction. Similarly, the reference image comparison approach requires a static environment for accuracy, which may fail to adapt to dynamic settings where the background scene may naturally change over time.

The present invention seeks to address these shortcomings by leveraging advanced instance segmentation techniques, capable of intelligently analysing video streams to identify and quantify obstructions. Unlike conventional approaches, the present invention provides greater accuracy and adaptability, capable of distinguishing between different types of obstructions and dynamically responding to the changing conditions of a surveillance environment.

The object of the present invention is achieved by a method for managing obstructions in a field of view of a surveillance camera. The method comprises receiving a video stream from the surveillance camera. The method further comprises processing the video stream to segment each object within the video stream. The method further comprises calculating an obstruction ratio representing a proportion of the field of view of the surveillance camera occluded by the segmented object. The method further comprises comparing the obstruction ratio with a predetermined obstruction threshold. The method further comprises generating an output signal when the obstruction ratio exceeds the predetermined obstruction threshold. The method further comprises configuring an alert unit to issue an obstruction alert upon being triggered by the output signal.

In one or more embodiments, the method also comprises monitoring intermittent blockages of the field of view of the surveillance camera by one or more moving objects. The method further comprises calculating a total blocked time by summing duration of each intermittent blockage within a monitored time interval. The method further comprises determining an effective unblocked time by subtracting the total blocked time from the monitored time interval. The method further comprises generating the output signal when the effective unblocked time is below a predefined operational view time threshold.

In one or more embodiments, the method also comprises calculating a total obstruction ratio as a sum of the obstruction ratios for each of the segmented objects. The method further comprises comparing the total obstruction ratio with the predetermined obstruction threshold. The method further comprises generating the output signal when the total obstruction ratio exceeds the predetermined obstruction threshold.

In one or more embodiments, the method also comprises designating an area of interest within the field of view of the surveillance camera. The method further comprises suspending triggering of the alert unit with the output signal if the designated area of interest is unobstructed, even if the obstruction ratio exceeds the predetermined threshold.

In one or more embodiments, the method also comprises receiving a video stream of an area of interest from a secondary surveillance camera with an overlapping field of view with the surveillance camera. The method further comprises upon generation of the output signal, determining if the area of interest as obscured in the field of view of the surveillance camera remains visible in the field of view of the secondary surveillance camera. The method further comprises suspending triggering of the alert unit with the output signal if the area of interest remains visible in the field of view of the secondary surveillance camera.

In one or more embodiments, the method also comprises configuring the alert unit to issue an obstruction warning if the area of interest is obscured in the field of view of the surveillance camera but remains visible in the field of view of the secondary surveillance camera.

In one or more embodiments, the method also comprises initiating a timer for a predetermined duration upon generation of the output signal. The method further comprises triggering the alert unit with the output signal upon completion of the predetermined duration.

In one or more embodiments, the predetermined duration is set based on at least one of: type of the segmented object, expected duration of occlusion by the segmented object.

In one or more embodiments, the predetermined duration is set based on at least one of: time of day, expected traffic flow within the field of view of the surveillance camera, historical data of past instances of obstructions within the field of view of the surveillance camera.

In one or more embodiments, the method also comprises providing an interface to deliver obstruction information upon generation of the output signal.

In one or more embodiments, the method also comprises configuring the interface for receiving an obstruction information acknowledgment. The method further comprises suspending triggering of the alert unit with the output signal upon receipt of the obstruction information acknowledgment.

In one or more embodiments, the method also comprises classifying the segmented objects into a known object or an unknown object. The method further comprises if the object causing the obstruction is the known object, issuing the obstruction alert of a first type with details of the known object. The method further comprises if the object causing the obstruction is the unknown object, issuing the obstruction alert of a second type indicating presence of the unknown object.

In one or more embodiments, the method also comprises determining an actual field of view of the surveillance camera, differing from a specified field of view of the surveillance camera. The method further comprises calculating the obstruction ratio representing a proportion of the actual field of view of the surveillance camera occluded by the object.

The object of the present invention is also achieved by a system comprising one or more processing units and a memory unit communicatively coupled to the one or more processing units. Herein, the memory unit comprises an obstructions management module stored in the form of machine-readable instructions executable by the one or more processing units, wherein the obstructions management module is configured to perform aforementioned method steps for managing obstructions in a field of view of a surveillance camera.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:

FIG 1 is a flowchart of a method for managing obstructions in a field of view of a surveillance camera, in accordance with one or more embodiments of the present invention;

FIG 2 is a block diagram representation of a system for managing obstructions in a field of view of a surveillance camera, in accordance with one or more embodiments of the present invention;

FIG 3A is an exemplary layout of an industrial premise with multiple surveillance cameras installed therein, in accordance with one or more embodiments of the present invention;

FIG 3B is a depiction of an exemplary scenario with an obstruction in a field of view of one of multiple surveillance cameras installed in the industrial premise, in accordance with one or more embodiments of the present invention;

FIG 4 is a flowchart of a process for managing obstructions in a field of view of a surveillance camera, in accordance with one or more embodiments of the present invention;

FIG 5 is a depiction of an exemplary scenario with a designated area of interest in the industrial premise and an obstruction in a field of view of one of multiple surveillance cameras installed in the industrial premise, in accordance with one or more embodiments of the present invention; and

FIG 6 is a depiction of an exemplary scenario with a designated area of interest in the industrial premise and one or more secondary surveillance cameras installed therein with an overlapping field of views with the other surveillance cameras, and with an obstruction in a field of view of one of multiple surveillance cameras installed in the industrial premise, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing obstructions in a field of view of a surveillance camera are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

The present invention provides a method and system for detecting and managing obstructions in the field of view of surveillance cameras. The present invention employs instance segmentation to process video streams from surveillance cameras, enabling the segmentation of each object within the view. An obstruction ratio is calculated for each segmented object, representing the proportion of the camera's field of view occluded by the object. When this ratio exceeds a predetermined threshold, an output signal is generated, triggering an alert unit to issue an obstruction alert. Thereby, the present invention ensures that surveillance effectiveness is maintained by promptly identifying and addressing obstructions in the field of view of surveillance cameras.

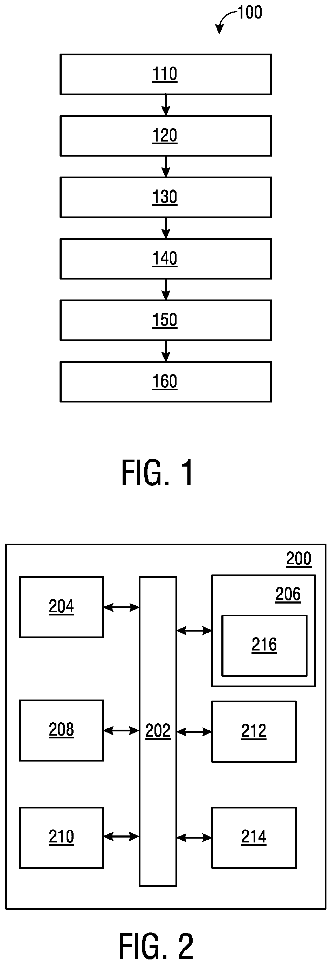

Referring now to FIG 1, illustrated is a flowchart of a method (as represented by reference numeral 100) for managing obstructions in a field of view of a surveillance camera, in accordance with an embodiment of the present invention. The method 100 provides a systematic approach for managing obstructions in the field of view of the surveillance camera within an industrial premise or the like, to ensure that ability of the surveillance camera to monitor the industrial premise is not compromised by objects blocking its view. As used herein, the industrial premise refers to a location used for industrial activities, such as manufacturing, processing, warehousing, or other operations involving machinery, vehicles, and workers. The industrial premises have specific surveillance needs due to the presence of valuable assets, the need for safety monitoring (e.g., ensuring the use of personal protective equipment), and the management of operational processes. The present invention is implemented for such industrial premises where continuous surveillance is required for safety, security, and operational efficiency.

The surveillance camera (hereinafter, sometimes, simply referred to as "camera" without any limitations) is a device installed within the industrial premise for the purpose of monitoring activities, ensuring safety, and securing assets. The surveillance camera may, typically, be a part of a broader surveillance system that may include multiple surveillance cameras, including some surveillance cameras with overlapping views; recording devices; and monitoring stations with interfaces for users, like admins, to control the surveillance operations. The field of view (FoV) of the surveillance camera is the extent of area of the industrial premise that the camera can capture at any given moment. A specified field of view of the surveillance camera is a maximum area that it is designed to cover, as per the design specifications. On the other hand, an actual field of view of the surveillance camera is real-world area that it effectively covers, which may be less than the specified FoV due to obstructions (such as a permanent structure), camera positioning, or environmental factors.

For purposes of the present invention, managing obstructions refers to the process of detecting, assessing, and responding to anything that blocks or partially blocks the FoV of the surveillance camera. This involves automatically identifying when an object enters the FoV of the surveillance camera and determining whether it constitutes an obstruction. This also involves quantifying the impact of the obstruction on the surveillance capability. This further involves prompting appropriate actions to mitigate impact of the obstruction, which may include issuing alerts, repositioning the camera (if possible), or physically removing the obstruction.

Referring to FIG 2, illustrated is a block diagram of a system 200 managing the obstructions in the field of view of the surveillance camera, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for digitalizing and analysing the engineering diagram for the industry environment. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein managing obstructions in the field of view of the surveillance camera. In particular, the memory unit 206 includes an obstructions management module 216 to perform steps for the said purpose.

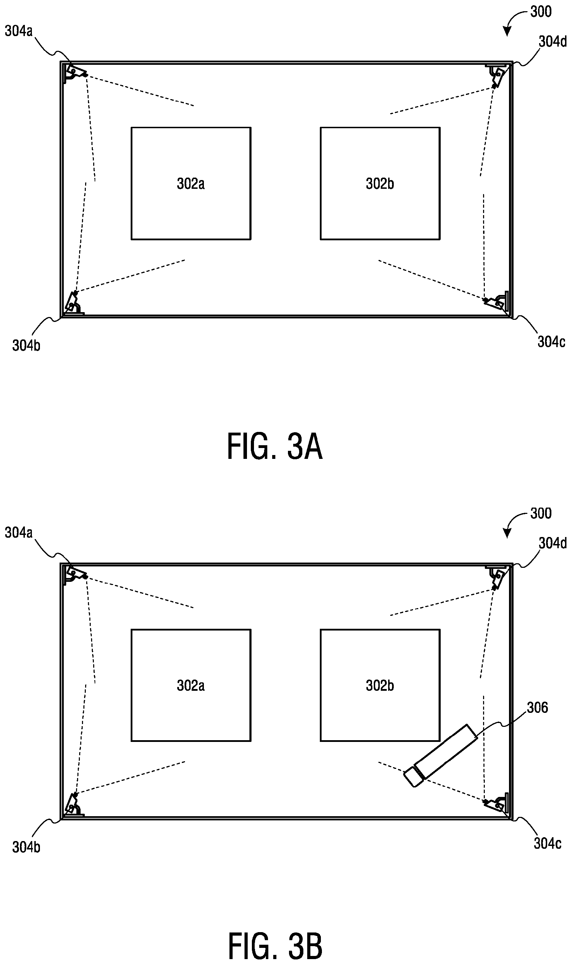

As illustrated in FIGS 3A and 3B, a layout of an industrial premise (as represented by reference numeral 300) with two areas 302a and 302b is configured with a plurality of surveillance cameras 304a-304d, each assigned to monitor distinct sections of the areas 302a-b of the industrial premise 300, to maximize coverage and minimize blind spots. In FIG 3B, an obstruction 306 is introduced into the field of view of one of the surveillance cameras (i.e., the surveillance camera 304c), by a transient object, exemplified as a trailer truck. This scenario demonstrates a condition where the field of view of the surveillance camera 304c is partially blocked, triggering the need for obstruction management by implementing the method 100 and the system 200 of the present disclosure.

Referring to FIGS 1-2 in combination, the various steps of the method 100 (as described hereinafter) may be executed in the system 200, or specifically in the processing unit 204 of the system 200, for managing obstructions in the field of view of the surveillance camera. It may be appreciated that although the method 100 is illustrated and described as a sequence of steps, it may be contemplated that various embodiments of the method 100 may be performed in any order or a combination and need not include all of the illustrated steps.

At step 110, the method 100 includes receiving a video stream from the surveillance camera. Herein, the system 200 may be configured to receive a continuous, real-time feed of the monitored area within the industrial premise. This ensures that all activities within the industrial premise are under constant surveillance, enabling the detection of any unusual events or safety violations. It may be appreciated that these cameras are strategically positioned across the industrial premise to maximize coverage and minimize blind spots. A networking setup, which may include wired (Ethernet) or wireless (Wi-Fi, 4G/5G) connections, may be implemented for the transmission of video streams from the cameras to the processing units or servers. In some examples, to efficiently transmit the video stream over the network, the video stream may be encoded and compressed using standards such as H.264 or H.265. This ensures high-quality video with minimal bandwidth usage. At the receiving end, the system 200 is equipped with hardware and software capable of decoding the incoming video stream, converting it back into a viewable format for real-time monitoring and further analysis.

At step 120, the method 100 includes processing the video stream to segment each object within the video stream. Herein, the system 200 processes the received video stream to identify and categorize each distinct object within the field of view of the surveillance camera. This is done to distinguish between different entities captured in the video, such as humans, vehicles, machinery, and other objects, making it possible to assess their impact on the field of view of the surveillance camera. By identifying individual objects, the system 200 may determine which objects are obstructing the field of view of the surveillance camera and to what extent.

In present examples, the system 200 may be configured to process video frames in real-time, segmenting objects frame by frame to maintain an up-to-date understanding of the scene.

In the present configuration, the segmentation allows for sophisticated surveillance capabilities, such as tracking the movement of specific objects, detecting unauthorized access, identifying safety violations (e.g., individuals not wearing required personal protective equipment), and the like. The segmentation may involve implementing computer vision and machine learning algorithms, particularly instance segmentation techniques. Instance segmentation is an advanced form of image analysis that identifies the presence of objects within an image and also delineates the precise boundaries of each object. This may include utilizing pre-trained deep learning models such as Mask R-CNN, YOLO (You Only Look Once), or other convolutional neural network (CNN) based architectures tailored for instance segmentation tasks. In some examples, these models may be fine-tuned based on industry-specific datasets.

It may be appreciated that for the purposes of the present disclosure, in general, the system 200 may employ any suitable artificial intelligence (AI) based techniques for the mentioned use cases of detection and tracking of the object(s) in the image. Such AI systems are capable of object detection, tracking and segmentations, which, in turn, allows for sophisticated surveillance capabilities, such as tracking the movement of specific objects, detecting unauthorized access, identifying safety violations (e.g., individuals not wearing required personal protective equipment), and the like.

At step 130, the method 100 includes calculating an obstruction ratio representing a proportion of the field of view of the surveillance camera occluded by the segmented object. In particular, the obstruction ratio is calculated by, first, computing the area occupied by each segmented object within the field of view of the surveillance camera. This involves analysing a pixel count within the boundaries identified during the instance segmentation process. Also, a total area of the field of view of the surveillance camera is established. The obstruction ratio is, then, calculated by dividing the area occupied by the segmented (obstructing) object by the total area of the field of view of the surveillance camera. In an example, the obstruction ratio may be expressed as a percentage, indicating the extent of the obstruction. This process of calculating the obstruction ratio quantifies the impact of identified objects on ability of the surveillance camera to monitor its environment effectively. Specifically, this is done to provide a measurable and objective assessment of how much each identified object (from the previous segmentation step) is obstructing the field of view of the surveillance camera, which, in turn, helps the system 200 with decision-making processes based on the severity of the obstruction.

At step 140, the method 100 includes comparing the obstruction ratio with a predetermined obstruction threshold.

That is, following the calculation of the obstruction ratio, which quantifies how much of the camera's view is blocked by an object, the system 200 evaluates whether the identified obstruction is significant enough to require further action. Herein, the predetermined obstruction threshold is set based on various factors, including the surveillance system's specific requirements, the criticality of the monitored area, and historical data on typical obstructions and their impact on surveillance effectiveness. The predetermined obstruction threshold represents the maximum allowable proportion of the field of view that can be occluded before functionality of the surveillance camera is considered compromised. For present purposes, in some examples, the system 200 employs simple numerical comparison to compare the calculated obstruction ratio for each segmented object against the predetermined obstruction threshold. In other examples, the system 200 may involve more complex decision-making logic considering additional factors like the type of object, its location within the field of view, and the criticality of the area being obstructed.

If the obstruction ratio is found to be below the predetermined obstruction threshold, it may be deemed acceptable, and no immediate action is required. This situation may occur in cases of minor or transient obstructions that do not significantly impact operational effectiveness of the surveillance camera. In such case, the system 200 may continue to monitor the obstruction, ensuring that any change in its status is promptly detected and addressed. However, if the obstruction ratio exceeds the predetermined threshold, it indicates a substantial blockage that could hinder ability of the surveillance camera to monitor the area effectively. Therefore, the use of the predetermined threshold allows the system 200 to be adaptable to different operational environments and requirements, offering flexibility in how surveillance systems are configured and managed. Further, the comparison ensures that response of the system 200 is calibrated to the severity of obstructions, maintaining operational efficiency by focusing on significant issues.

At step 150, the method 100 includes generating an output signal when the obstruction ratio exceeds the predetermined obstruction threshold. This process enables the system 200 to respond proactively to situations where the effectiveness of the surveillance is compromised by obstructions. The generation of the output signal acts as a trigger for other components of the system 200 (as discussed in the proceeding paragraphs) to initiate a predefined response to the identified obstruction. For this purpose, the system 200 may be equipped with a mechanism to generate electronic or digital signals in response to specific conditions, in this case, the exceeding of the predetermined obstruction threshold. By automatically generating the output signal based on the analysed data, the system 200 enhances the automation of the surveillance process, reducing the need for constant human monitoring.

At step 160, the method 100 includes configuring an alert unit to issue an obstruction alert upon being triggered by the output signal. This process provides that once a significant obstruction is detected and quantified, exceeding the predetermined obstruction threshold, the system 200 communicates this issue for resolution. Herein, the alert unit is a specialized component within the system 200, as part of the obstructions management module 216, to communicate potential issues or threats detected by the system 200 to the relevant stakeholders. The alert unit may be a dedicated hardware device or a software application integrated into the surveillance system. Upon receiving the output signal generated when the obstruction ratio exceeds the predetermined threshold, the alert unit activates its protocols to issue the obstruction alert.

Herein, the obstruction alert may range from visual signals on a control panel, audible alarms, text messages, emails, or push notifications to connected devices, without any limitations. In some examples, the obstruction alert may be a digital alert transmitted to a central monitoring station or directly to security personnel's handheld devices. In more integrated systems, the obstruction alert may trigger automated responses, such as activating alternative camera angles, adjusting camera positions to bypass the obstruction, or even deploying physical measures to remove the obstruction. Further, in some examples, the alert unit may be configured to specify recipients of the obstruction alert, such as security personnel, system administrators, or automated response systems. It may be appreciated that the primary purpose of the obstruction alert is to prompt a response to the identified obstruction, aiming to minimize the reduced operational efficiency of the surveillance camera.

In some cases, the obstructions may be short-lived, which may increase the burden of false alarms on security personnel and system administrator. To resolve such cases, the method 100 includes initiating a timer for a predetermined duration upon generation of the output signal. As discussed, upon identifying an obstruction whose ratio exceeds the predetermined obstruction threshold, the system 200 generates the output signal. Following this, herein, the system 200 initiates the timer, counting down from the predetermined duration. The method 100, then, includes triggering the alert unit with the output signal upon completion of the predetermined duration. Herein, after the predetermined duration has elapsed, the system 200 then checks if the obstruction is still present. If during this predetermined duration, the obstruction has cleared, the system 200 resumes normal operations without further action. However, if the obstruction persists beyond duration of the timer, it is indicative of a more permanent or significant issue that requires attention. At this point, the alert unit is triggered by the output signal, signalling it to issue the obstruction alert. The incorporation of the timer and subsequent triggering of the alert unit allows the system 200 to manage its responses to obstructions effectively. By avoiding immediate alerts for transient obstructions, the system 200 reduces unnecessary alarms and focuses resources on addressing those obstructions that genuinely compromise the camera's surveillance capabilities.

In an embodiment, the predetermined duration is set based on at least one of: type of the segmented object, expected duration of occlusion by the segmented object. As may be understood, different objects may warrant different timer durations due to their potential to obstruct the view for varying lengths of time. For instance, a larger vehicle, such as a 3-axle truck, which could take longer to clear the FoV, may have a longer timer duration assigned as compared to a smaller object like a 3-wheeler goods carrier. Additionally and/or alternatively, the timer for the predetermined duration may be set to reflect the expected duration of occlusion by the segmented object, which may be equated to an average duration an object typically obstructs the FoV. For instance, if a certain type of vehicle usually passes within a few seconds, the timer would account for this, avoiding premature alerts for such brief occlusions.

In an embodiment, the predetermined duration is set based on at least one of: time of day, expected traffic flow within the field of view of the surveillance camera, historical data of past instances of obstructions within the field of view of the surveillance camera. In an example, the system 200 takes into account the typical activity levels during different times of the day. For example, if the surveillance area is less active during the early morning hours, the timer duration may be extended to avoid unnecessary alerts for occasional obstructions. During peak activity times, however, the duration may be shortened to ensure quick responses to any obstruction that could more critically impact operations. In another example, if the camera monitors an area with expected periods of high traffic flow, such as during shift changes or designated loading and unloading times, the timer duration may be adjusted accordingly to account for the predictable, temporary increase in obstructions. Additionally and/or alternatively, historical trends of obstruction events may be used to set the timer's duration (similar to adaptive traffic signal timings). If historical data indicate high activity levels at certain times, the timer duration may be reduced to maintain a high alert readiness. Conversely, during historically low activity periods, the timer duration may be increased to reduce false alarms.

In some embodiments, the method 100 includes classifying the segmented objects into a known object or an unknown object. That is, after processing the video stream to segment each object, the system 200 classifies these objects as either known object or unknown object. This classification can be based on a database or repository of object profiles that is referenced by the system 200. If the system 200 can match the segmented object to a profile in the database, it is classified as the known object; if no match is found, it is classified as the unknown object. If the object causing the obstruction is the known object, the method 100 includes issuing the obstruction alert of a first type with details of the known object. This first type alert may include details of the known object, such as its type, size, and any other relevant information that may assist in the object's quick removal or management. This allows for a more targeted response, possibly enabling quicker resolution to remove the corresponding obstruction. On the other hand, if the object causing the obstruction is the unknown object, the method 100 may include issuing the obstruction alert of a second type indicating presence of the unknown object. This second type alert signals the presence of the unidentified object, which may require a different response approach. Such alert for the unknown object may initiate more investigative response due to the uncertainty about the object's nature. Such differentiated alerts allow for more targeted and efficient allocation of resources, ensuring that responses are proportionate to severity of the obstruction.

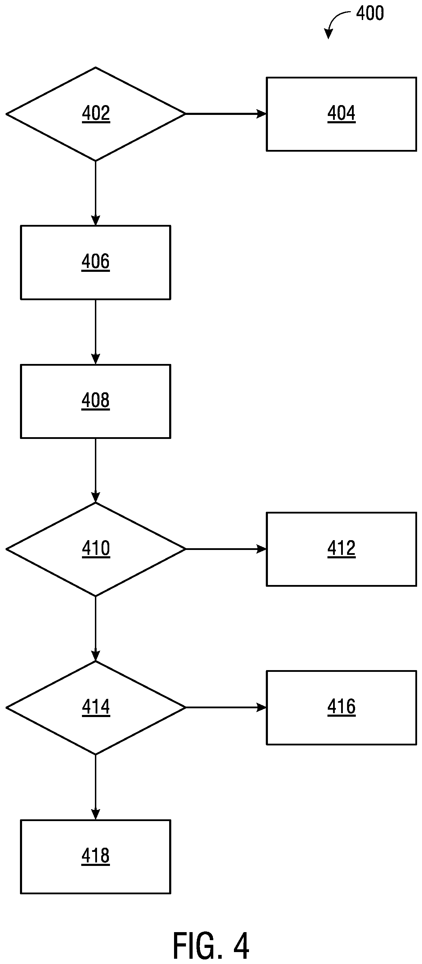

Referring to FIG 4, illustrated is a flowchart of a process (as represented by reference numeral 400) for managing obstructions in the field of view of the surveillance camera. At block 402, an initial analysis is performed where the video stream from the surveillance camera is reviewed to detect any potential obstructions in the FoV. If there is "No" obstruction, then the process 400 moves to block 404 where it is continued with normal analysis. If "Yes", i.e., the obstruction is found, the process 400 moves to block 406, where the process 400 proceeds to segment the object within the video stream, isolating it for further analysis. Further, at block 408, a timer is initiated when it is identified that the obstruction exceeds the predetermined obstruction threshold, indicating a potential issue that needs tracking over time. At block 410, after the timer concludes, the process 400 reevaluates the video stream to confirm if the obstruction persists. If "No", then the process 400 moves to block 412 where it disregards the previous alert condition and continues normal surveillance operations. If "Yes", i.e., the obstruction is still found, the process 400 moves to block 414, where the process 400 attempts to identify the object by comparing it against a database of known objects. If the object cannot be identified, at block 416, the process 400 generates the output signal which triggers the alert unit to issue a generic obstruction alert. Otherwise, when the object is identified, at block 418, the process 400 generates the output signal to prompt the alert unit to issue a specific alert that includes details about the obstruction.

In surveillance systems, particularly those deployed in dynamic environments such as industrial premises, the field of view (FoV) of cameras is susceptible to obstructions from various sources, including moving objects, temporary structures, or environmental elements. These obstructions can significantly compromise the effectiveness of surveillance, potentially leading to gaps in monitoring and reduced security. The conventional approach of addressing each obstruction independently may not suffice in environments where multiple obstructions coexist, each contributing to the overall impact on the surveillance capabilities.

In some cases, the industrial premises may have areas with high activity levels, where transient obstructions can frequently occur. In such case, the method 100 includes monitoring intermittent blockages of the field of view of the surveillance camera by one or more moving objects. For this, the system 200 may continuously analyse the video stream to detect the presence and movement of objects within the camera's field of view. This involves using motion detection algorithms and object tracking techniques to identify moving objects and their paths across the camera's field of view, and recording instances where they cause blockages. The method 100 further includes calculating a total blocked time by summing duration of each intermittent blockage within a monitored time interval. That is, for each detected blockage, the system 200 records its start and end times, calculating the duration of each blockage. These durations are then summed to obtain the total blocked time within the monitored time interval. The method 100 further includes determining an effective unblocked time by subtracting the total blocked time from the monitored time interval. That is, the system 200 calculates the effective unblocked time by taking the total duration of the monitored time interval (which could be a predefined period like an hour, a shift, or a day) and subtracting the total blocked time. This may be calculated as:

```
Effective    Unblocked    Time    =    (Monitored    Time    Interval)    -
Sum(Duration of Each Intermittent Blockage)
```

The method 100 further includes generating the output signal when the effective unblocked time is below a predefined operational view time threshold. Herein, the system 200 compares the effective unblocked time against the predefined operational view time threshold, which represents the minimum acceptable duration for effective surveillance within the monitored interval. If the effective unblocked time is below the predefined operational view time threshold, the system 200 generates the output signal (as discussed in the preceding paragraphs) to trigger the obstruction alert or other predetermined responses. By accounting for intermittent blockages, herein, the system 200 ensures that temporary obstructions do not cumulatively degrade the overall effectiveness of the surveillance operation. This process enables the system 200 to adapt its response based on the dynamic conditions within the camera's field of view, ensuring that surveillance resources are optimally utilized.

Also, it may be appreciated that individual obstructions, while possibly minor on their own, can collectively result in a substantial reduction of the surveillance coverage. In such case, the method 100 includes calculating a total obstruction ratio as a sum of the obstruction ratios for each of the segmented objects. The total obstruction ratio is determined by first segmenting and identifying objects within the camera's FoV that potentially obstruct the view. Each object is analysed to calculate its individual obstruction ratio, which represents the proportion of the FoV occluded by that particular object. The system 200 then aggregates these individual ratios to compute the total obstruction ratio. The method 100 further includes comparing the total obstruction ratio with the predetermined obstruction threshold. That is, upon calculating the total obstruction ratio, the system 200 proceeds to compare this value with the predetermined obstruction threshold (as discussed). Herein, the predetermined obstruction threshold may be established as representing a maximum acceptable level of obstruction before the surveillance effectiveness is considered compromised. The method 100 further includes generating the output signal when the total obstruction ratio exceeds the predetermined obstruction threshold. That is, when the total obstruction ratio exceeds the predetermined obstruction threshold, it triggers the system 200 to generate the output signal, which, in turn, may initiate various responses (as discussed in the preceding paragraphs). This approach ensures that the system 200 remains effective and responsive, even in complex scenarios characterized by multiple concurrent obstructions, thereby maintaining the operational efficiency of the surveillance camera.

As discussed, the field of view of the surveillance camera may be the specified field of view (as designed) or the actual field of view (considering real-world conditions and obstructions like walls or fixed installations. Herein, the specified FoV typically represents the manufacturer's stated coverage area of the camera lens under ideal conditions. This specification is based on the camera's lens properties, sensor size, and intended use case, providing users with an estimate of the area the camera can cover. However, in real-world scenarios, the actual FoV can differ significantly from the specified FoV due to various factors. One such factor is the installation angle and location of the camera. Cameras installed at different angles or obstructed by unforeseen structural elements can have their effective FoV altered, reducing the area under surveillance. Environmental conditions, such as lighting, can also impact the camera's ability to capture the full extent of its specified FoV, with shadows or glare effectively reducing the usable FoV. Furthermore, physical obstruction, such as a newly constructed structure, branch of a tree, or even the gradual buildup of dirt and debris on the camera lens, can further reduce the actual FoV.

In an embodiment, the method 100 includes determining the actual field of view of the surveillance camera, differing from the specified field of view of the surveillance camera. The actual FoV may be determined by analysing the camera's feed to identify the boundaries within which objects are detectable and distinguishable. This analysis can be done through software algorithms capable of mapping the visible area and comparing it against the camera's known specifications. Herein, the method 100 includes calculating the obstruction ratio representing a proportion of the actual field of view of the surveillance camera occluded by the segmented object. That is, once objects are segmented, the system 200 calculates the area occupied by each object in relation to the total area of the actual FoV. The actual FoV is considered in this calculation to account for any deviations from the camera's specified FoV, ensuring that the calculation reflects real-world conditions.

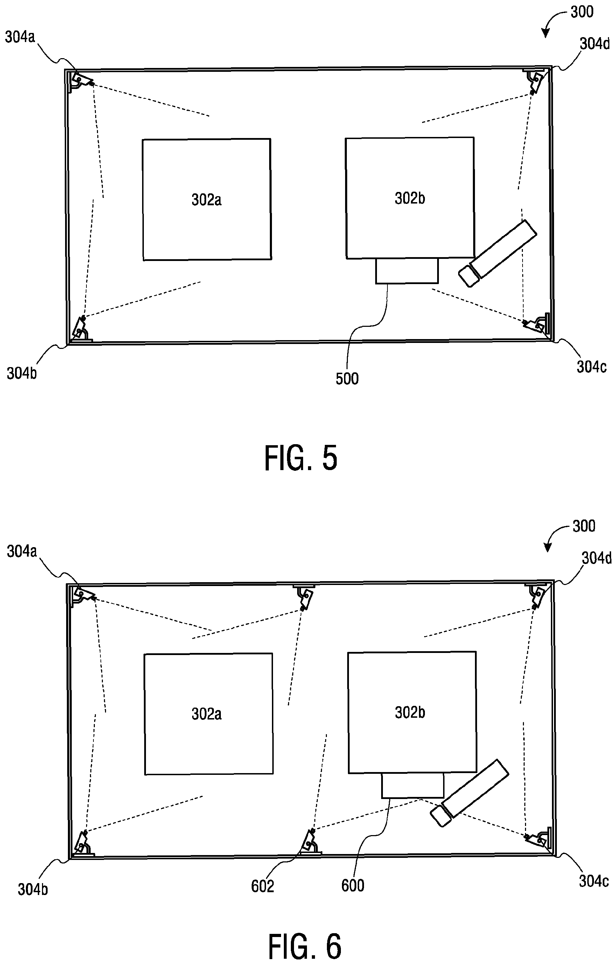

Further, in surveillance operations, particularly within controlled environments like industrial premises, the focus often centres on specific areas for monitoring due to safety, security, or operational considerations. These are designated as areas of interest within the field of view of the surveillance camera. As illustrated in FIG 5, the area 302b of the industrial premise 300 is shown with an area of interest 500. The present method 100 may particularly be adapted to discern the impact of obstructions on these areas of interest. In the event of the obstruction within the FoV of the surveillance camera 304c, depicted here by the presence of a trailer truck, the system 200 employs a methodical approach to assess the impact on the designated area of interest.

For this implementation, the method 100 includes designating an area of interest within the field of view of the surveillance camera. This may be achieved by software interface of the system 200, where administrators can visually select and mark these areas on a digital representation of the camera's field of view. The ability to designate and adjust the areas of interest allows the system 200 to adapt to changing surveillance needs and priorities, offering flexibility to accommodate different operational scenarios. The method 100 further includes suspending triggering of the alert unit with the output signal if the designated area of interest is unobstructed, even if the obstruction ratio exceeds the predetermined threshold. That is, in cases where the area of interest (such as, the area of interest 500) is not impeded by the obstruction, the system 200 suspends the triggering of the alert unit. Such suspension may be implemented through conditional logic, which checks the status of these areas before proceeding with any alerting actions. This means that even if the obstruction ratio exceeds the predetermined threshold due to size of the obstruction, as long as the area of interest is visible, the alert unit is not activated. The system 200 thus prioritizes the monitoring of the area of interest within the FoV and suspends issuing unnecessary alerts, ensuring that the surveillance resources are concentrated on such segments.

Furthermore, in surveillance operations, particularly in areas that require consistent and uninterrupted monitoring, the presence of obstructions in the field of view of the surveillance camera can compromise security and operational oversight. This presents a problem where critical events or activities within the area of interest may go undetected, posing a risk to security and operational efficiency. To address this challenge, the system 200 incorporates the use of a secondary surveillance camera with an overlapping FoV with the primary surveillance camera. This secondary camera serves as a redundancy measure, ensuring that the area of interest remains under surveillance even when the primary camera's view is obstructed. As illustrated in FIG 6, the area 302b of the industrial premise 300 is shown with an area of interest 600, with the camera 304c covering the area of interest 600 within the FoV thereof. Herein, a secondary camera 602 is also provided offering an additional viewpoint of the area of interest 600. The trailer truck, depicted as obstructing the view of the camera 304c, presents a scenario where the system 200 can dynamically respond using the camera 602, with its overlapping field of view with the camera 304c, ensuring that the area of interest 600 remains visible, maintaining uninterrupted surveillance.

For this implementation, the method 100 includes receiving the video stream of an area of interest (such as, the area of interest 600) from a secondary surveillance camera (such as, the camera 602) with an overlapping field of view with the surveillance camera (such as, the camera 304c). Herein, the system 200 is configured to receive the video stream from the secondary camera simultaneously with the video stream of the primary surveillance camera. The method 100 further includes, upon generation of the output signal, determining if the area of interest as obscured in the field of view of the surveillance camera remains visible in the field of view of the secondary surveillance camera. Herein, the system 200 determines whether the area of interest, despite being obscured from the primary camera's perspective, remains visible in the secondary camera's FoV. The method 100 further includes suspending triggering of the alert unit with the output signal if the area of interest remains visible in the field of view of the secondary surveillance camera. That is, if visibility of the area of interest is confirmed through the secondary camera, the system 200 suspends the triggering of the alert unit that would typically be activated by the output signal (indicative of obstruction) corresponding to the primary camera. This suspension prevents the issuance of false alarms that could lead to unnecessary responses or resource deployment, thus optimizing efficiency of the system 200.

In the present embodiment, the method 100 further includes configuring the alert unit to issue an obstruction warning if the area of interest is obscured in the field of view of the surveillance camera but remains visible in the field of view of the secondary surveillance camera. As discussed, the obstruction within the FoV of the surveillance camera that obscures the area of interest presents a significant concern. However, if this area of interest remains visible within the FoV of the secondary surveillance camera, the risk posed by the obstruction is mitigated. In such instances, the alert unit may be configured differently. Instead of issuing a full-fledged obstruction alert, which would typically be the case if the area of interest was completely obscured from all camera views, the alert unit is set to issue the obstruction warning. This obstruction warning acknowledges impact of the obstruction on the primary surveillance camera while also recognizing that the area of interest continues to be monitored effectively by the secondary surveillance camera.

In an embodiment, the method 100 further includes providing an interface to deliver obstruction information upon generation of the output signal. That is, upon the generation of the output signal, which occurs when the obstruction ratio exceeds the predetermined obstruction threshold, the system 200 implements an interface to deliver detailed information about the obstruction. This interface serves as a medium for conveying data to security personnel or system administrators, which may include the location, size, type, and duration of the obstruction. The availability of this information allows for a more informed and effective response to the obstruction.

In the present embodiment, in some cases, the method 100 also includes configuring the interface for receiving an obstruction information acknowledgment. This acknowledgment mechanism allows a user, such as a security officer or a surveillance operator, to confirm receipt of the obstruction information and, if appropriate, indicate that the obstruction has been addressed or does not require further action. The method 100 further includes suspending triggering of the alert unit with the output signal upon receipt of the obstruction information acknowledgment. That is, upon receipt of the acknowledgment, the system 200 suspends the triggering of the alert unit with the output signal. This suspension serves as an acknowledgment that the obstruction has been recognized and assessed by a responsible party, and that the automatic alert may not be necessary.

The present invention offers several advantages over existing solutions. Traditional methods relying on changes in image quality or reference image comparison may not effectively detect all types of obstructions or do so in real-time. By employing instance segmentation, the present invention provides a more accurate and dynamic approach to obstruction detection, capable of identifying and quantifying obstructions in real-time. Additionally, the present invention by designating areas of interest and integrating secondary camera views, allows for more effective surveillance, ensuring that critical areas are monitored continuously despite potential obstructions. The ability to segment objects allows the system 200 to adapt its surveillance focus dynamically. For example, it can prioritize monitoring specific types of objects or areas within the field of view, enhancing surveillance effectiveness. Beyond obstruction management, the segmented data can provide valuable insights into the types of activities and movements within the industrial premise, contributing to operational intelligence and safety analytics. This level of sophistication and adaptability represents a significant advancement in surveillance technology.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

| | | |
|---|---|---|
| 1. | method | 100 |
| 2. | step | 110 |
| 3. | step | 120 |
| 4. | step | 130 |
| 5. | step | 140 |
| 6. | step | 150 |
| 7. | step | 160 |
| 8. | system | 200 |
| 9. | bus | 202 |
| 10. | processing unit | 204 |
| 11. | memory unit | 206 |
| 12. | interface | 208 |
| 13. | database | 210 |
| 14. | input device | 212 |
| 15. | output device | 214 |
| 16. | obstructions management module | 216 |
| 17. | industrial premise | 300 |
| 18. | client applications layer | 302 |
| 19. | areas | 302a- 302b |
| 20. | surveillance cameras | 304a-304d |
| 21. | obstruction | 306 |
| 22. | process | 400 |
| 23. | block | 402 |
| 24. | block | 404 |
| 25. | block | 406 |
| 26. | block | 408 |
| 27. | block | 410 |
| 28. | block | 412 |
| 29. | block | 414 |

(continued)

| 30. | block | 416 |
| 31. | block | 418 |

**Claims**

1. A method (100) for managing obstructions in a field of view of a surveillance camera (304a-304d), the method (100) comprising:

receiving a video stream from the surveillance camera (304a-304d) ;
processing the video stream to segment each object (306) within the video stream;
calculating an obstruction ratio representing a proportion of the field of view of the surveillance camera (304a-304d) occluded by the segmented object (306);
comparing the obstruction ratio with a predetermined obstruction threshold;
generating an output signal when the obstruction ratio exceeds the predetermined obstruction threshold; and
configuring an alert unit to issue an obstruction alert upon being triggered by the output signal.

2. The method (100) of claim 1 further comprising:

monitoring intermittent blockages of the field of view of the surveillance camera (304a-304d) by one or more moving objects (306) ;
calculating a total blocked time by summing duration of each intermittent blockage within a monitored time interval;
determining an effective unblocked time by subtracting the total blocked time from the monitored time interval; and
generating the output signal when the effective unblocked time is below a predefined operational view time threshold.

3. The method (100) of claim 1 further comprising:

calculating a total obstruction ratio as a sum of the obstruction ratios for each of the segmented objects (306);
comparing the total obstruction ratio with the predetermined obstruction threshold; and
generating the output signal when the total obstruction ratio exceeds the predetermined obstruction threshold.

4. The method (100) of claim 1 further comprising:

designating an area of interest (500, 600) within the field of view of the surveillance camera (304a-304d); and
suspending triggering of the alert unit with the output signal if the designated area of interest (500, 600) is unobstructed, even if the obstruction ratio exceeds the predetermined threshold.

5. The system of claim 1 further comprising:

receiving a video stream of an area of interest (500, 600) from a secondary surveillance camera (602) with an overlapping field of view with the surveillance camera (304a-304d);
upon generation of the output signal, determining if the area of interest (500, 600) as obscured in the field of view of the surveillance camera (304a-304d) remains visible in the field of view of the secondary surveillance camera (602); and
suspending triggering of the alert unit with the output signal if the area of interest (500, 600) remains visible in the field of view of the secondary surveillance camera (602).

6. The method (100) of claim 5 further comprising configuring the alert unit to issue an obstruction warning if the area of interest (500, 600) is obscured in the field of view of the surveillance camera (304a-304d) but remains visible in the field of view of the secondary surveillance camera (602).

7. The method (100) of claim 1 further comprising:

initiating a timer for a predetermined duration upon generation of the output signal; and

triggering the alert unit with the output signal upon completion of the predetermined duration.

8.  The method (100) of claim 7, wherein the predetermined duration is set based on at least one of: type of the segmented object (306), expected duration of occlusion by the segmented object (306).

9.  The method (100) of claim 7, wherein the predetermined duration is set based on at least one of: time of day, expected traffic flow within the field of view of the surveillance camera (304a-304d), historical data of past instances of obstructions within the field of view of the surveillance camera (304a-304d).

10. The method (100) of claim 1 further comprising providing an interface to deliver obstruction information upon generation of the output signal.

11. The method (100) of claim 10 further comprising:

    configuring the interface for receiving an obstruction information acknowledgment; and
    suspending triggering of the alert unit with the output signal upon receipt of the obstruction information acknowledgment.

12. The method (100) of claim 1 further comprising:

    classifying the segmented objects (306) into a known object (306) or an unknown object (306);
    if the object (306) causing the obstruction is the known object (306), issuing the obstruction alert of a first type with details of the known object (306); and
    if the object (306) causing the obstruction is the unknown object (306), issuing the obstruction alert of a second type indicating presence of the unknown object (306).

13. The method (100) of claim 1 further comprising:

    determining an actual field of view of the surveillance camera (304a-304d), differing from a specified field of view of the surveillance camera (304a-304d); and
    calculating the obstruction ratio representing a proportion of the actual field of view of the surveillance camera (304a-304d) occluded by the segmented object (306).

14. A system (200) comprising:

    one or more processing units (204); and
    a memory unit (206) communicatively coupled to the one or more processing units (204), wherein the memory unit (206) comprises an obstructions management module (216) stored in the form of machine-readable instructions executable by the one or more processing units (204), wherein the obstructions management module (216) is configured to perform method (100) steps for managing obstructions in a field of view of a surveillance camera (304a-304d), according to any of the claims 1 to 13.

15. A computer-program product having machine-readable instructions stored therein, which when executed by one or more processing units (204), cause the one or more processing units (204) to perform a method (100) according to any of the claims 1 to 13.

100

| 110 |
| 120 |
| 130 |
| 140 |
| 150 |
| 160 |

FIG. 1

200

| 204 | | 206 |
| | 202 | 216 |
| 208 | | 212 |
| 210 | | 214 |

FIG. 2

FIG. 3A

FIG. 3B

FIG. 4

FIG. 5

FIG. 6

Europäisches
Patentamt

European
Patent Office

Office européen
des brevets

## EUROPEAN SEARCH REPORT

**Application Number**

EP 24 16 0218

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | CN 113 221 603 A (CHINA TELECOM CO LTD) 6 August 2021 (2021-08-06)<br>* paragraph [0003] *<br>* paragraphs [0005] - [0008] *<br>* paragraphs [0037] - [0039] *<br>* paragraphs [0049] - [0060] *<br>* paragraph [0062] *<br>* paragraph [0065] *<br>* figure 9 *<br>- - - - - | 1,3,<br>13-15<br>7-12<br>2,4-6 | INV.<br>G08B13/196<br>G08B21/04<br>G08B29/18<br>G06V20/52 |
| Y | US 2023/124850 A1 (ADATO YAIR [IL] ET AL) 20 April 2023 (2023-04-20)<br>* paragraph [0288] *<br>* paragraph [0514] *<br>* paragraphs [0517], [0518] *<br>* paragraphs [0526], [0527] *<br>* paragraph [0529] *<br>* paragraph [0535] *<br>* paragraph [0539] *<br>* paragraph [0557] *<br>* paragraph [0563] *<br>- - - - - | 7-12 | |
| A | EP 4 064 212 A2 (BEIJING BAIDU NETCOM SCI & TECH CO LTD [CN]) 28 September 2022 (2022-09-28)<br>* paragraphs [0025] - [0040] *<br>* paragraphs [0079], [0080] *<br>- - - - - | 1-15 | **TECHNICAL FIELDS SEARCHED (IPC)**<br><br>G08B<br>G06V |

The present search report has been drawn up for all claims

| Place of search | Date of completion of the search | Examiner |
|---|---|---|
| Munich | 3 September 2024 | Meister, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0218

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2024

| Patent document cited in search report | | Publication date | Patent family member(s) | | Publication date |
|---|---|---|---|---|---|
| CN 113221603 | A | 06-08-2021 | NONE | | |
| US 2023124850 | A1 | 20-04-2023 | CA | 3078985 A1 | 18-07-2019 |
| | | | EP | 3738073 A1 | 18-11-2020 |
| | | | EP | 3742336 A1 | 25-11-2020 |
| | | | EP | 3754545 A1 | 23-12-2020 |
| | | | EP | 3754546 A1 | 23-12-2020 |
| | | | US | 2019236531 A1 | 01-08-2019 |
| | | | US | 2022262141 A1 | 18-08-2022 |
| | | | US | 2023124850 A1 | 20-04-2023 |
| | | | US | 2023334418 A1 | 19-10-2023 |
| | | | US | 2024257050 A1 | 01-08-2024 |
| | | | WO | 2019140091 A1 | 18-07-2019 |
| EP 4064212 | A2 | 28-09-2022 | CN | 113628236 A | 09-11-2021 |
| | | | EP | 4064212 A2 | 28-09-2022 |
| | | | JP | 2022106926 A | 20-07-2022 |
| | | | KR | 20220075275 A | 08-06-2022 |
| | | | US | 2022244057 A1 | 04-08-2022 |

EPO FORM P0459

For more details about this annex : see Official Journal of the European Patent Office, No. 12/82